# EUROPEAN PATENT APPLICATION

(11) **EP 2 645 555 A2**
(43) Date of publication of application: **02.10.2013**
(21) Application number: 13159372.5
(22) Date of filing: 15.03.2013
(51) Int. Cl.: H02M 3/156, H05B 33/08

(54) **Switching power source device and illuminating apparatus**

(30) Priority: 29.03.2012 JP 2012077605; 21.06.2012 JP 2012139378
(71) Applicant: Toshiba Lighting & Technology Corporation, Yokosuka-shi Kanagawa 237-8510 (JP)
(72) Inventor: Takahashi, Yuji, Kanagawa 237-8510 (JP); Kitamura, Noriyuki, Kanagawa 237-8510 (JP); Otake, Hirokazu, Kanagawa 237-8510 (JP); Tsuji, Toshio, Kanagawa 237-8510 (JP)
(74) Representative: Bokinge, Ole

(57) **Abstract**

A switching power source device (SR) according to an embodiment includes: a direct power source (DC); and a chopper circuit (CHC) which includes a pair of input terminals (t1, t2) connected to the direct power source (DC) and a pair of output terminals (t3, t4) connected to a load, and the chopper circuit (CHC) includes a first inductor (L1), a second inductor (DW) which is magnetically coupled to the first inductor (L1), a third inductor (L3) which is connected to the first inductor (L1), a switching element (Q1) which causes an augmented current to flow from the direct power source (DC) to the first and third inductors (L1, L3) while turned on, a constant current element (CCM) which is connected to the switching element (Q1) in series, a rectifier element (D1) which causes a reduced current to flow through the first and third inductors (L1, L3) while the switching element (Q1) is turned off, and a drive circuit which controls a gate voltage of the switching element (Q1) and turns off the switching element after the switching element (Q1) is turned on and the augmented current reaches a constant current element (CCM) saturated state.

## Description

### FIELD

Embodiments described herein relate generally to a switching power source device and an illuminating apparatus.

### BACKGROUND

A switching power source device is a power source device which uses a switching element for converting and adjusting power in a power converter for obtaining desired output power from input power. Among the switching power source devices, a DC-DC converter for converting direct power to direct power with a different direct voltage is included.

Since the switching element configured by a wide band gap semiconductor can be switched at a frequency which is significantly higher than that of a switching element in the related art, which is configured by Si, for example, at a frequency from several hundreds kHz to 1 MHz, it is possible to expect significant reduction in size of the switching power source device. Here, the wide band gap semiconductor means a semiconductor with a wider band gap than a band gap of gallium arsenide (GaAs) whose band gap is about 1.4 eV. Examples of the wide band gap semiconductor include a semiconductor with a band gap of 1.5 eV or more such as gallium phosphide (GaP, band gap: about 2.3 eV), gallium nitride (GaN, band gap: about 3.4 eV), diamond (C, band gap: about 5.27 eV), aluminum nitride (AlN, band gap: about 5.9 eV), and silicon carbide (SiC).

If a switching frequency is increased as compared with that in the related art by using a wide band gap semiconductor as a switching element of the switching power source device, it is possible to reduce a capacity value of a capacitor and an inductance value of an inductor for the capacitor and the inductor among passive components of the switching power source device and to thereby downsize the capacitor and the inductor.

However, there is a concern that provision of an auxiliary winding for controlling drive of the switching element in the downsized inductor may prevent the downsizing of the inductor. Alternatively, if the inductor can be downsized, there is a concern that the structure becomes complicated due to the provision of the auxiliary winding.

### DESCRIPTION OF THE DRAWINGS

FIG. 1 is a circuit diagram showing a switching power source device according to Example 1;
Fig. 2 is a circuit diagram showing a switching power source device according to Example 2;
Fig. 3 is an illustrative diagram showing structures of a first inductor and a drive winding according to Example 2;
Fig. 4A to FIG. 4F are explanatory diagrams showing a current waveform chart and a voltage waveform chart of each component according to Example 2;
Fig. 5 is a circuit diagram showing a switching power source device according to Example 3;
Fig. 6 is a circuit diagram showing a switching power source device according to Example 4;
Fig. 7 is a graph showing current and voltage properties of a switching element according to Example 4;
Fig. 8 is a circuit diagram showing a switching power source device according to Example 5;
Fig. 9 is a circuit diagram showing a switching power source device according to Example 6;
Fig. 10 is a circuit diagram showing a switching power source device according to Example 7;
Fig. 11 is a circuit diagram showing a switching power source device according to Example 8;
Fig. 12 is a circuit diagram showing a switching power source device according to Example 9;
Fig. 13 is a circuit diagram showing a switching power source device according to Example 10;
Fig. 14 is a circuit diagram showing a switching power source device according to Example 11;
Fig. 15 is an explanatory diagram of inductance with respect to a frequency property of an inductor according to Example 11;
Fig. 16 is an explanatory diagram showing impedance with respect to the frequency property of the inductor according to Example 11;
Fig. 17 is a circuit diagram showing a switching power source device according to Example 12;
Fig. 18 is a circuit diagram showing a switching power source device according to Example 13;
Fig. 19 is a circuit diagram showing a switching power source device according to Example 14;
Fig. 20 is a circuit diagram showing a switching power source device according to Example 15;
Fig. 21 is a circuit diagram showing a switching power source device according Example 16;
Fig. 22 is a circuit diagram showing a switching power source device according to Example 17;
Fig. 23 is a circuit diagram showing a switching power source device according to Example 18;
Fig. 24 is a circuit diagram showing a switching power source device according to Example 19; and
Fig. 25 is a circuit diagram showing a switching power source device according to Example 20.

### DETAILED DESCRIPTION

A switching power source device according to an embodiment includes: a direct power source; and a chopper circuit which includes a pair of input terminals connected to the direct power source and a pair of output terminals connected to a load, and the chopper circuit includes a first inductor, a second inductor which is magnetically coupled to the first inductor, a third inductor which is connected to the first inductor, a switching element which causes an augmented current to flow from the direct power source to the first and third inductors while turned on, a constant current element which is connected to the switching element in series, a rectifier element which causes a reduced current to flow through the first and third inductors while the switching element is turned off, and a drive circuit which controls a gate voltage of the switching element and turns off the switching element after the switching element is turned on and the augmented current reaches a constant current element saturated state.

According to another embodiment, there is provided an illuminating apparatus including: a load circuit in which an output capacitor and an illuminating load are connected in parallel; and a switching power source device, the switching power source device includes a direct power source and a chopper circuit which includes a pair of input terminals connected to the direct power source and a pair of output terminals connected to the load circuit, and the chopper circuit includes a first inductor, a second inductor which is magnetically coupled to the first inductor, a third inductor which is connected to the first inductor, a switching element which causes an augmented current to flow from the direct power source to the first and third inductors while turned on, a constant current element which is connected to the switching element in series, a rectifier element which causes a reduced current to flow through the first and third inductors while the switching element is turned off, and a drive circuit which controls a gate voltage of the switching element and turns off the switching element after the switching element is turned on and the augmented current reaches a constant current element saturated state.

Hereinafter, a description will be given of embodiments with reference to the drawings.

In addition, the drawings are schematically and conceptually depicted, and a relationship between a thickness and a width of each component, ratio of sizes between components, and the like are not always the same as those in practice. In addition, a same part may be shown with different dimensions and ratios depending on drawings.

In addition, same reference numerals will be given to same elements as those described in a drawing in the above description, and a detailed description thereof will be appropriately omitted in the specification and the drawings of the present application.

### First Embodiment

A switching power source device according to a first embodiment includes: an input terminal; a direct power source which is connected to the input terminal; a chopper circuit which is connected to the direct power source; and an output terminal which is connected to the chopper circuit and connected to a load, and the chopper circuit includes a first inductor, a second inductor which is magnetically coupled to the first inductor, a third inductor which is connected to the first inductor, a switching element which cause an augmented current to flow from the direct power source to the first and third inductors while turned on, a constant current element which is connected to the switching element in series, a rectifier element which causes a reduced current to flow through the first and third inductors while the switching element is turned off, and a drive circuit which controls a gate voltage of the switching element and turns off the switching element after the switching element is turned on and the augmented current reaches a constant current element saturated state.

### Second Embodiment

A switching power source device according to a second embodiment is characterized by the third inductor being configured with a plurality of fourth inductors with equal inductance in the switching power source device according to the first embodiment.

### Third Embodiment

A switching power source device according to a third embodiment is characterized by the first and second inductors being formed as electrically-conducting paths on a circuit substrate of the chopper circuit in the switching power source device according to the first or second embodiment.

### Fourth Embodiment

A switching power source device according to a fourth embodiment is characterized by a magnetic body which accommodates the first and second inductors therein being formed in the switching power source device according to the third embodiment.

### Fifth Embodiment

An illuminating apparatus according to a fifth embodiment is characterized by including a load circuit in which an output capacitor and an illuminating load are connected in parallel and by being connected to the output terminal of the switching power source device according to any one of the first to fourth embodiments.

Hereinafter, a description will be given of the switching power source devices and the illuminating apparatus according to the embodiments with reference to the drawings.

### Example 1

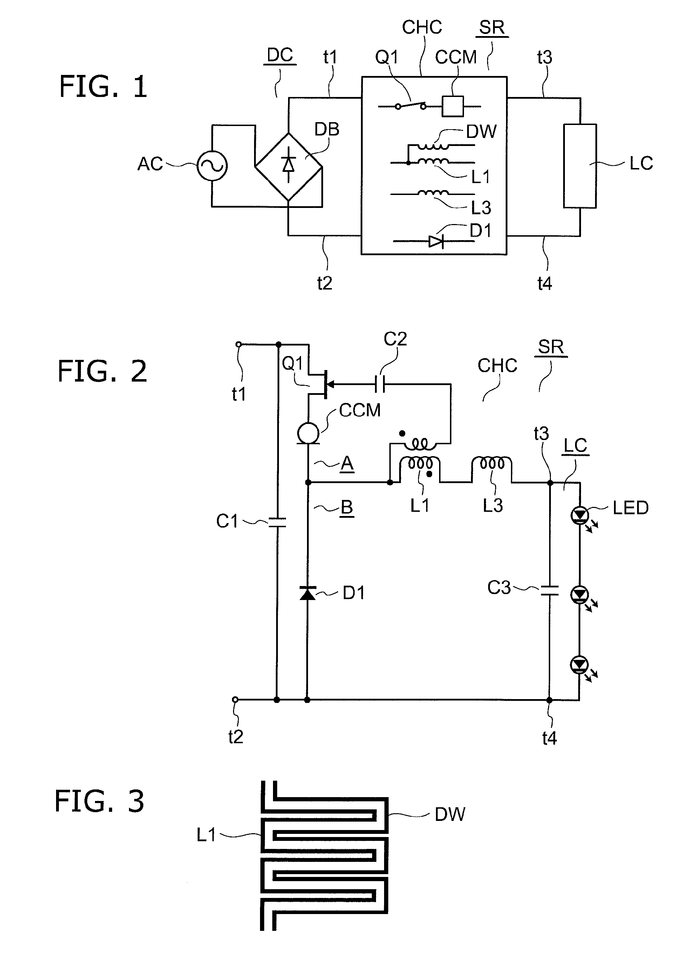

Hereinafter, a description will be given of a configuration of a switching power source device SR according to Example 1 with reference to Fig. 1. The switching power source device SR includes a direct power source DC, a chopper circuit CHC, and a load circuit LC.

In Example 1, the chopper circuit CHC is based on a concept including various choppers such as a buck chopper, a boost chopper, and a buck-boost chopper. The above respective choppers are common in DC-DC converting a direct power source voltage and output the direct power source voltage to output terminals t3 and t4 by repeating an operation of causing an augmented current to flow from the direct power source DC to a first inductor L1 and a third inductor L3 by turning on a switching element Q1 and causing a reduced current to flow through a diode D1 by electromagnetic energy accumulated in the third inductor L3 by turning off the switching element Q1.

The direct power source DC is means for inputting a direct voltage before conversion to the chopper circuit CHC, which will be descried later. The direct power source DC may have any configuration as long as the direct power source DC outputs a direct voltage, and for example, the direct power source DC can be configured mainly by a rectifier circuit DB and provided with a smoothing circuit configured by a smoothing capacitor or the like, as necessary. In Example 1, the rectifier circuit DB is preferably configured by a bridge-type rectifier circuit and obtains a direct voltage by performing full-wave rectification on an alternate voltage of an alternate power source AC such as a commercial alternate power source.

In Example 1, the chopper circuit CHC includes a pair of input terminals t1 and t2 and a pair of output terminals t3 and t4. The chopper circuit CHC includes the switching element Q1, a constant current element CCM, the first inductor L1, the third inductor L3, the diode D1, and a drive winding DW (second inductor) as essential components which are common in any of the above configurations.

The switching element Q1 may be any one of a normally-off switch and a normally-on switch. If a wide band gap semiconductor such as GaN-HEMT, is used as the switching element Q1, it is possible to perform switching control at a high frequency from several hundreds kHz to 1 MHz or more, for example, at 10 MHz or more, to downsize the first to third inductors, and to thereby significantly downsize the chopper circuit CHC and the switching power source device SR.

If the switching element Q1 is a switching element using a wide band gap semiconductor, a switching element with a normally-off property is also applicable and may be used while a switching element with a normally-on property is easily obtained at low cost. In addition, since a switching threshold value of the normally-on switch is a negative value, off control using the drive winding DW that is magnetically coupled to the first inductor L1 can be easily performed, which is preferable.

As the constant current element CCM, a constant current element in which a constant current value is fixedly set in advance or in which a constant current value is variable may be used. The constant current element CCM is circuit means with a constant current property, and for example, it is possible to use various constant current circuits, for example, using a constant current diode, a junction-type FET, a three-terminal regulator, and a transistor. In addition, a known constant current using one or two transistors is also allowable as the constant current circuit using a transistor. In addition, GaN-HEMT as a kind of the junction-type FET can be used as the constant current element CCM. Since the switching element is excellent in a switching property at a high frequency from several hundreds kHz to 1 MHz or more, the switching element is preferably used for performing high-speed switching.

One end of the first inductor L1 is connected to the drive winding DW. In addition, the other end of the first inductor L1 is connected to one end of the third inductor L3. The drive winding DW is magnetically coupled to the first inductor L1 and drives the switching element Q1 by inducing a voltage which is substantially proportional to a terminal voltage of the first inductor L1 and applying the voltage to a control terminal of the switching element Q1.

The drive winding DW is a winding which is magnetically coupled to the first inductor L1 and controls the switching element Q1. That is, if the augmented current flowing through the first inductor L1 and the third inductor L3 when the switching element Q1 is turned on reaches a constant current value of the constant current element CCM, the voltage at both ends of the constant current element CCM rises, a main terminal (source) potential of the switching element Q1 exceeds a control terminal potential, the control terminal potential becomes a negative potential with respect to the main terminal (source) potential and falls below a threshold value, and the switching element is thus tuned off.

### Example 2

Hereinafter, a description will be given of a configuration of a switching power source device SR according to Example 2 with reference to Fig. 2. In the respective drawings, same reference numerals will be given of same parts as those in Fig. 1, and a description thereof will be omitted.

In Example 2, GaN-HEMT is respectively used for the switching element Q1 and the constant current element CCM, and the first inductor L1 and the third inductor L3 are connected between the constant current element CCM and the load circuit LC. A high-frequency bypass capacitor C1 is connected between the input terminals t1 and t2 of the chopper CH. A coupling capacitor C2 is inserted between the drive winding DW and the control terminal of the switching element Q1.

An internal circuit of the chopper circuit CHC can be classified into a first circuit A and a second circuit B in terms of circuit operations. The first circuit A is a circuit, through which the augmented current is made to flow from the direct power source DC to accumulate electromagnetic energy in the first inductor L1 and the third inductor L3. In the case of the buck chopper, the first circuit A has a configuration in which a series circuit including the switching element Q1, the constant current element CCM, the first inductor L1, the third inductor L3 and the load circuit LC is connected to the direct power source DC. In addition, the augmented current flows therethrough from the direct power source DC when the switching element Q1 is turned on, and the electromagnetic energy is accumulated in the first inductor L1 and the third inductor L3.

The second circuit B is a circuit, from which the electromagnetic energy accumulated in the first inductor L1 and the third inductor L3 is released to cause the reduced current to flow. In the case of the buck chopper, the second circuit B has a configuration in which a series circuit including the diode D1 and the load circuit LC, which will be described later, is connected to the first inductor L1 and the third inductor L3, and the reduced current is made to flow therethrough from the first inductor L1 and the third inductor L3 when the switching element Q1 is turned off.

In the case of the boost chopper, the chopper circuit CHC can be configured by a first circuit A in which a series circuit including the first inductor L1, the third inductor L3, the switching element Q1, and the constant current element CCM is connected to the direct power source DC and a second circuit B in which a series circuit including the first inductor L1, the third inductor L3, the diode D1, and the load circuit LC is connected to the direct power source DC. A case of the buck-boost chopper is as described above.

The load circuit LC includes an output capacitor C3 which includes a light emitting diode LED as an illuminating load, which functions as a load, bypasses a high-frequency component, and is connected in parallel. In the case of the buck chopper, the load circuit LC is connected to a position on a circuit through which both the augmented current and the reduced current are made to flow. In the case of the boost chopper, the load circuit LC is connected to a position on a circuit in which the reduced current is made to flow. In addition, a single light emitting diode LED is arranged in a forward direction with respect to the current flowing through the output terminal of the chopper, or a plurality of light emitting diodes LED are connected in series or in series parallel. In addition, the illuminating load may be an EL (Electro Luminescence), an OLED (Organic Light-Emitting Diode), or the like.

The constant current element CCM is interposed in series with the switching element in the first circuit in which the current flows through the first inductor L1 and the third inductor L3 when the switching element Q1 is turned on. In addition, the constant current element CCM is also interposed in the drive circuit of the switching element Q1 which includes the drive winding DW for driving the switching element Q1. With the above configuration, the voltage of the constant current element CCM rapidly rises if the augmented current flowing through the constant current element CCM reaches the constant current value and then further increases, and therefore, the voltage rise occurring in the constant current element CCM at that time makes it possible to increase the main terminal (source, for example) potential incorporated in the drive circuit of the switching element Q1 relative to the control terminal (gate, for example) potential. As a result, the control terminal potential is lower than the threshold value of the switching element Q1, and therefore, it is possible to turn off the switching element Q1. Although the circuit operation can be more easily and reliably performed if the switching element Q1 is a normally-on switch and the threshold value is a negative value, the circuit operation is also effective in a normally-off switch.

In Example 1, it is allowable to directly connect the switching element Q1 and the constant current element CCM in series, and in such a case, it becomes easier to mount and integrate the switching element Q1 and the constant current CCM on a common semiconductor chip such as a GaN system chip. In such a case, it is possible to configure the switching element Q1 and the constant current element CCM by an IC module with a four-terminal structure which includes two power system terminals configured by one main terminal such as drain of the switching element Q1 and a main terminal of the constant current element CCM on the side of the other end with respect to the switching element Q1, and two control system terminals configured by control terminals such as gates of the switching element Q1 and the constant current element CCM, and a further downsized single component can be obtained.

The diode D1 provides the second circuit B as a route through which the reduced current flows out from the first inductor L1 and the third inductor L3. If a wide band gap semiconductor such as a GaN system diode is used as the diode D1, higher-speed switching is possible. In such a case, it becomes easier to configure the diode D1 along with the switching element Q1 and the constant current element CCM as an integrated circuit of a semiconductor device. The integrated circuit has a structure which includes a main terminal on one end side thereof, a main terminal on the other end side, and a total of five external terminals including three power system main terminals configured by main terminals at intermediate connection points and two control terminals for controlling the switching element Q1 and the constant current element CCM, respectively in the series connected body of the constant current element CCM and the diode D1.

Next, a description will be given of structures of the first inductor L1 and the drive winding DW in Example 2 with reference to Fig. 3.

The first inductor L1 and the drive winding DW are configured by wiring (electrically-conducting paths) on a substrate on which the switching element Q1, the constant current element CCM, and the like are mounted. As shown in Fig. 3, the first inductor L1 and the drive winding DW are formed into a shape in which L shapes are sequentially aligned. In addition, the first inductor L1 and the drive winding DW are magnetically coupled by being provided in the vicinity on a same surface of the substrate. Furthermore, the first inductor L1 and the drive winding DW are not formed on the same surface of the substrate and may be respectively provided on one surface side and the other surface side of the substrate at facing positions, for example. By arranging a magnetic body so as to accommodate the first inductor L1 and the drive winding DW therein, it is possible to increase a degree of magnetic coupling and obtain magnetic shielding.

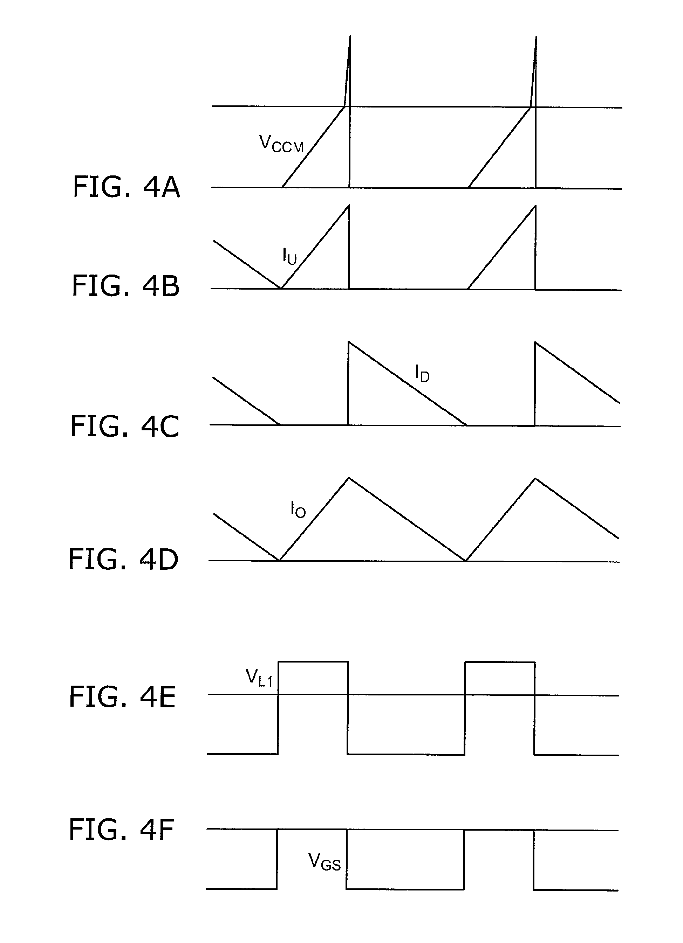

Next, a description will be given of a circuit operation in Example 2 with reference to Figs. 2 and 4.

A current starts to flow through the first circuit A from the direct power source DC via the switching element Q1 and the constant current element CCM and linearly increases if the direct power source DC is activated since the switching element Q1 of the chopper circuit CHC is turned on. In doing so, electromagnetic energy is accumulated in the first inductor L1 and the third inductor L3. In addition, a voltage VGS between the gate and the source of the switching element Q1 is a voltage which is equal to or more than the threshold value while the switching element Q1 is turned on. If the augmented current reaches the constant current value of the constant current element CCM, the current increase tendency is stopped, and the current is maintained to be constant. In addition, a terminal voltage of the third inductor L3 has positive polarity as shown in Fig. 4E while the augmented current flows through the first inductor L1 and the third inductor L3.

Since the current flowing through the first inductor L1 and the third inductor L3 attempts to further increase if the augmented current reaches the constant current value of the constant current element CCM, a voltage VCCM of the constant current element CCM increases in a pulsed manner as shown in Fig. 4A. Since the source potential of the switching element Q1 increases to be higher than the control terminal (gate) potential with the increase in the voltage, and as a result, the control terminal potential becomes a negative potential relative to the source potential, the switching element Q1 is turned off. The release of the electromagnetic energy accumulated in the first inductor L1 and the third inductor L3 starts at the same time when the switching element Q1 is turned off, and a reduced current starts to flow through the second circuit B as shown in Fig. 4C. The voltage polarity of the first inductor L1 is inverted to a negative polarity as shown In Fig. 4E, a voltage is induced to the drive winding DW such that the control terminal potential of the switching element Q1 is a negative potential relative to the source potential while the reduced current flows, and the switching element Q1 is turned off when the voltage falls below the threshold voltage.

If the reduced current flowing through the second circuit reaches zero, the induction of the negative voltage applied to the control terminal of the switching element Q1 is stopped. At the same time, the control terminal potential relative to the source potential becomes positive as shown in Fig. 4F due to counter-electromotive force of the first inductor L1, and the voltage which exceeds the threshold potential is induced to the control terminal. Therefore, the switching element Q1 is turned on again, and the same circuit operation as that described above is repeated hereinafter.

As can be clearly understood from the above circuit operation, the chopper circuit CHC performs the buck chopper operation, an output current IO is formed as shown in Fig. 4D such that the augmented current and the reduced current alternately flow through the load circuit LC connected between the output terminals t3 and t4 thereof, the light emitting diode LED is turned on by the direct current components thereof, and the output capacitor C3 bypasses the high-frequency component.

Next, a description will be given of effects of Examples 1 and 2.

According to the switching power source device SR of Example 1 or 2, the first inductor L1 of the drive circuit of the switching element Q1 is separately provided from the third inductor L3 of the chopper circuit CHC, and the first inductor L1 and the drive winding DW which is magnetically coupled to the first inductor L1 are configured by wiring on the substrate on which the switching element Q1, the constant current element CCM and the like are mounted. Therefore, it is possible to downsize the first inductor L1 and the third inductor L3. In addition, it is possible to configure the first inductor L1 and the drive winding DW which is magnetically coupled to the first inductor L1 without any complicated configurations. For this reason, it is possible to downsize the first inductor L1 and the drive winding DW which is magnetically coupled to the first inductor L1. In addition, it is possible to configure the structure of the third inductor L3 without complicating the structure.

### Example 3

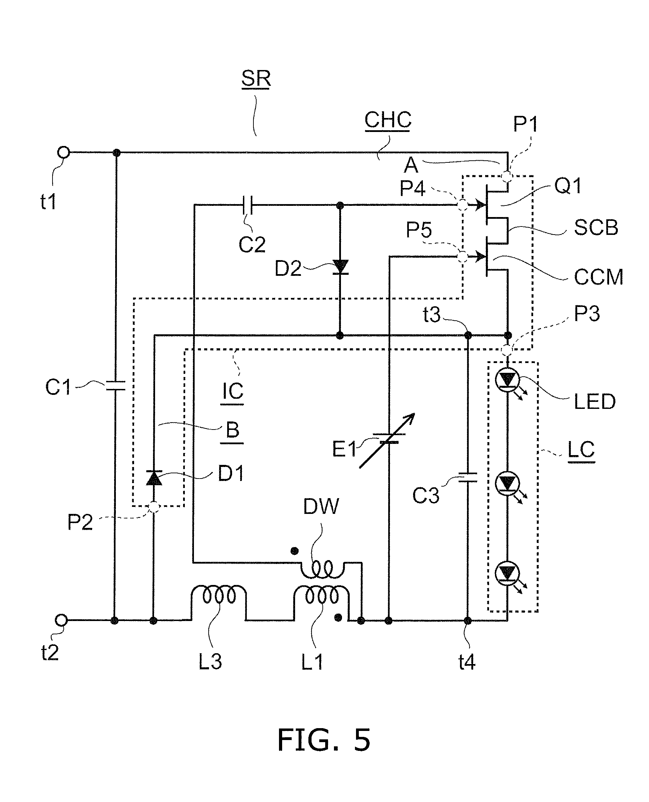

A description will be given of Example 3. Fig. 5 is a circuit diagram showing a switching power source device SR according to Example 3. In Fig. 5, the same reference numerals will be given to the same parts as those in Figs. 1 to 4, and a description thereof will be omitted.

A description will be given of a configuration of the switching power source device SR according to Example 3 with reference to Fig. 5. In a series connected body SCB of a device IC for a switching power source of the switching power source device SR according to Example 3, the switching element Q1, the constant current element CCM, and the diode D1 are connected in this order in series with polarities as shown in Fig. 5. A first external terminal P1 is derived from one main terminal (drain) of the first switching element Q1, and a second external terminal P2 is derived from the other main terminal (anode) of the diode D1. In addition, a third external terminal P3 is derived from a contact point between the other main terminal (source) of the constant current element CCM and one terminal (cathode) of the diode D1. A fourth external terminal P4 is derived from the control terminal (gate) of the first switching element Q1, and a fifth external terminal P5 is derived from the control terminal (gate) of the constant current element CCM. As described above, the device IC for the switching power source according to this embodiment includes the five external terminals.

As shown in Fig. 5, the chopper circuit CHC is a buck chopper. In addition, GaN-HEMT is respectively used as the switching element Q1 and the constant current element CCM of the device IC for the switching power source. The first inductor L1 and the third inductor L3 are connected between the load circuit LC and the input terminal t2. The drive winding DW is connected between the fourth external terminal P4 and the third external terminal P3 of the device IC for the switching power source, namely between the control terminal (gate) of the first switching element Q1 and the other main terminal (source) of the constant current element CCM via the load circuit LC and the coupling capacitor C2.

In the device IC for the switching power source, the first external terminal P1 is connected to the input terminal t1, the second external terminal P2 is connected to the input terminal t2, and the third external terminal P3 is connected to one end of the load circuit LC.

The high-frequency bypass capacitor C1 is connected between the input terminals t1 and t2 of the chopper circuit CHC. In addition, Fig. 5 shows a configuration of an electric device, to which the light emitting diode (illuminating load) LED is connected as the load circuit LC. Although a configuration in which three light emitting diodes LED are included is shown in Fig. 5, an arbitrary number of light emitting diodes may be connected. In addition, the output capacitor C3 is connected to both ends of the load circuit LC.

The first circuit A is configured by a parallel circuit including the input terminal t1, the switching element Q1, the constant current element CCM, the output capacitor C3, and the load circuit LC and a series circuit including the first inductor L1, the third inductor L3, and the input terminal t2. The second circuit B is configured by a closed circuit of a parallel circuit including the first inductor L1, the third inductor L3, the diode D1, and the output capacitor C3 and the load circuit LC.

The constant current element CCM is configured such that the constant current value thereof is adjustable by varying the gate potential relative to the source potential by using a potential source E1 capable of adjusting a potential difference. The potential source E1 capable of adjusting a potential difference is connected between the control terminal (gate) and the other main terminal (source) of the constant current element CCM via the fifth external terminal P5 of the device IC for the switching power source and the load circuit LC. In addition, if the constant current element CCM is an element with a normally-on property, the potential source E1 may be configured to also output negative (-) potential if desired. In doing so, it is possible to turn off the switching element Q1 by turning off the constant current element CCM and to thereby widely perform control. In addition, a clamp diode D2 clamps a voltage VGS between the control terminal (gate) and the main terminal (source) of the switching element Q1 to 0.6 V or less, for example. The level of the voltage VGS between the gate and the source of the first switching element Q1 is shifted to the negative (-) potential side. Therefore, it is possible to reliably turn on and off the switching element Q1.

Next, a description will be given of a circuit operation of the switching power source device SR shown in Fig. 5.

If the direct power source DC is activated, the switching element Q1 of the chopper circuit CHC is turned on. The current starts to flow through the first circuit A from the direct power source DC via the switching element Q1 and the constant current element CCM, and the current linearly increases. In doing so, electromagnetic energy is accumulated in the first inductor L1 and the third inductor L3. The voltage at both ends of the constant current element CCM is controlled to be substantially equal to or less than a predetermined value until the augmented current reaches the constant current value of the constant current element CCM. When the augmented current flows through the first inductor L1 and the third inductor L3, the terminal voltage of the first inductor L1 has a positive polarity.

Since the current flowing through the first inductor L1 and the third inductor L3 attempts to further increase if the augmented current reaches the constant current value of the constant current element CCM, a voltage VCCM at both ends of the constant current element CCM increases in a pulsed manner. Since the main terminal (source) potential of the switching element Q1 increases to be higher than the control terminal (gate) potential with the increase in the voltage. As a result, the control terminal potential relatively becomes a negative potential, and the switching element Q1 is turned off. The release of the electromagnetic energy accumulated in the first inductor L1 and the third inductor L3 starts at the same time when the switching element Q1 is turned off, and a reduced current (regenerative current) starts to flow through the second circuit B. In addition, the voltage polarity of the first inductor L1 is inverted to a negative polarity, a potential is induced to the drive winding DW such that the control terminal potential of the switching element Q1 is a negative potential relative to the source potential when the reduced current flows, and the induced negative potential is applied between the control terminal (gate) and the other main terminal (source) of the switching element Q1 via the constant current element CCM. The switching element Q1 is turned off and is maintained in an off state.

If the reduced current flowing through the second circuit B reaches zero, the induction of the negative potential applied to the control terminal (gate) of the switching element Q1 is stopped. At the same time, a potential to cause the control terminal potential to be positive due to counter-electromotive force is induced to the drive winding DW. Therefore, the switching element Q1 is turned on again, and the same circuit operation as that described above is repeated hereinafter.

If α represents an on duty (a ratio Ton/T of a period Ton, during which the switching element Q1 is turned on, with respect to a cycle T) of the switching element Q1, Vin represents an input voltage, and Vout represents an output voltage, the buck chopper circuit satisfies Vout = Vin·α, and the output voltage Vout which is lower than the input voltage Vin can be obtained in the above operation.

An output current is formed at the load circuit LC, which is connected between the output terminals t3 and t4, such that the augmented current and the reduced current alternately flow. The light emitting diode LED is turned on by the direct components thereof. The output capacitor C3 bypasses the high-frequency component. The effect in Example 3 is the same as those in Examples 1 and 2.

### Example 4

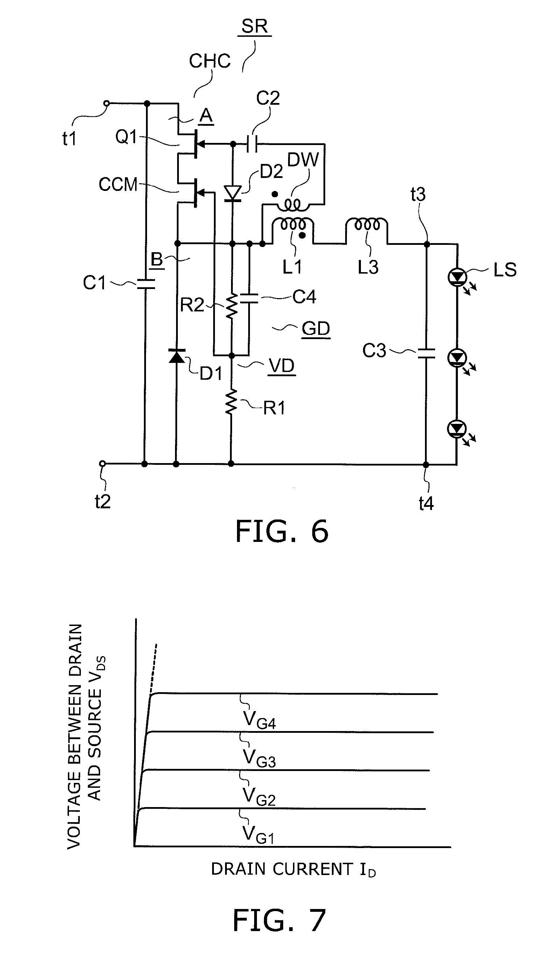

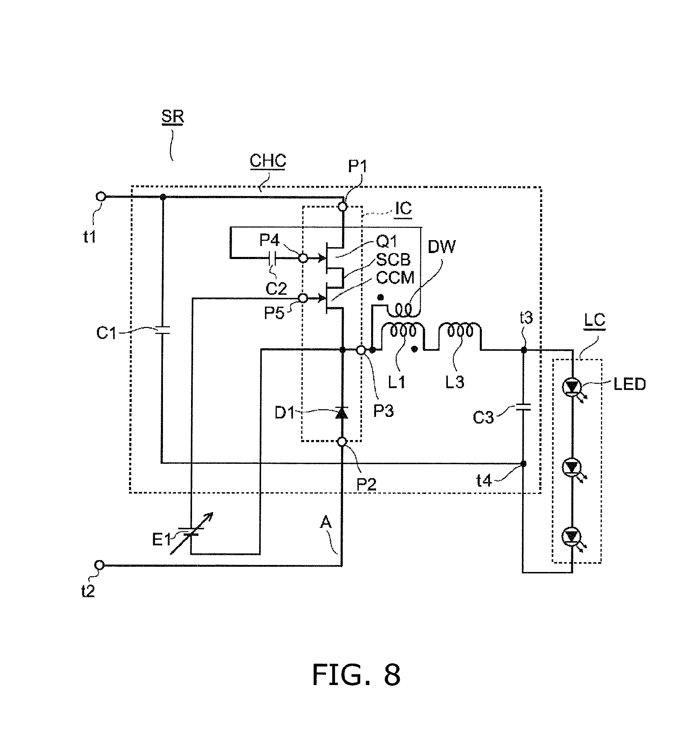

A description will be given of Example 4. Fig. 6 is a circuit diagram showing a switching power source device SR according to Example 4. In addition, Fig. 7 is a graph showing current and voltage properties of a switching element according to Example 4. In Figs. 7 and 8, the same reference numerals will be given to the same parts as those in Figs. 1 to 6, and a description thereof will be omitted.

Next, a description will be given of a configuration of the switching power source device SR according to Example 4 with reference to Fig. 6.

Although the switching power source device SR is configured by a buck chopper circuit CHC in the same manner as in Examples 1 to 3, a protect circuit is configured so as to stop the operation if the output current exceeds an expected maximum current. In addition, the switching power source device SR is configured such that an input current which is equal to or more than a self retaining current of a phase control element of a phase control circuit is made to flow at the same time when an alternate power source is activated if the switching power source device SR is connected to the alternate power source via the phase control circuit.

In Example 4, the constant current element CCM is the same as those in Examples 1 to 3 in that the constant current property of the switching element which is similar to the switching element Q1 is desirably set by changing the voltage to be applied to the control terminal (gate). However, a gate circuit GD of the constant current element CCM is configured by a voltage-dividing circuit VD and a capacitor C4 as shown in Fig. 6. The voltage-dividing circuit VD is configured by connecting a series circuit of resistors R1 and R2 to the diode D1 in parallel. In addition, the capacitor C4 is connected to the resistor R2 in parallel. In the gate circuit GD with this configuration, the voltage of the resistor R2 is smoothed by the capacitor C4 and applied between the control terminal (gate) and the main terminal (source) of the constant current element CCM. By appropriating the setting of the voltage-dividing voltage, the aforementioned operation conditions are satisfied.

The input current which is equal to or more than the self retaining current of the phase control element is made to flow at the same time when the alternate power source is activated, and the protection circuit which stops the operation of the switching power source device SR immediately before the input current exceeds an expected maximum current is configured. The protection circuit is configured by adjusting the voltage-dividing output of the voltage-dividing circuit VD in advance so as to set the voltage to be applied to the gate of the constant current element CCM to a value which causes the ON state when the current is equal to or more than the self retaining current, and by adjusting the ON and OFF threshold values of the switching element Q1 to the expected maximum current.

That is, the voltage of the constant current element CCM may be set so as to satisfy an inequality expression of Vth(Q1) > VGS(Q1) - VQ2. Here, Vth(Q1) represents a threshold value of the switching element Q1, VGS(Q1) represents a voltage between the gate and the source of the switching element Q1, and VQ2 represents an ON voltage of the constant current element CCM. As shown in Fig. 7, VQ2 is a product between an ON resistance RON in an ON region of the voltage and current properties of the constant current element CCM and a maximum current IMAX, namely an ON voltage. In the ON region, the voltage and the current are in a proportional relationship, and the ON resistance RON corresponds to a gradient of a voltage and current property curve in the ON region. The ON voltage VQ2 can be desirably selected by adjusting the voltage-dividing output of the voltage-dividing circuit VD in the gate circuit GD.

Next, a description will be given of a circuit operation of the switching power source device SR shown in Fig. 6.

In Example 4, if an alternate power source which is not shown in the drawing is activated, and a direct input voltage is applied between the input terminals t1 and t2, the current which is equal to or more than the self retaining current of the phase control element of the phase control circuit which is not shown in the drawing starts to flow through the switching element Q1, and the switching power source device SR is started. If the current flowing through the switching element Q1 starts to increase due to some reason during the operation of the switching power source device SR, the ON voltage VQ2 of the constant current element CCM increases with the increase in the current. Therefore, the voltage between the gate and the source of the switching element Q1 falls below the threshold value when the current reaches the maximum current, and the above inequality expression is satisfied. As a result, the switching element Q1 is turned off. Therefore, the operation of the switching power source device SR is stopped, which results in safety. An effect of Example 4 is the same as those in Examples 1 to 3.

### Example 5

A description will be given of Example 5. Fig. 8 is a circuit diagram showing a switching power source device SR according to Example 5. In Fig. 8, the same reference numerals will be given to the same parts as those in Figs. 1 to 7, and a description thereof will be omitted.

Next, a description will be given of a configuration of the switching power source device SR according to Example 5 with reference to Fig. 8.

The switching power source device SR shown in Fig. 8 is a buck type in the same manner as in Example 3, and the first inductor L1 and the third inductor L3 are connected at positions interposed between the constant current element CCM and the parallel circuit of the output capacitor C3 and the load circuit LC. In addition, the potential source E1 capable of adjusting a potential difference is directly connected between the control terminal (gate) and the other main terminal (source) of the constant current element CCM. Furthermore, both ends of the drive winding DW are connected between the fourth external terminal P4 and the third external terminal P3 of the device IC for the switching power source via the coupling capacitor C2. In addition, the circuit operation of the switching power source device SR shown in Fig. 7 is the same as those in Examples 1 to 4. Furthermore, an effect of Example 5 is the same as those of Examples 1 to 4.

### Example 6

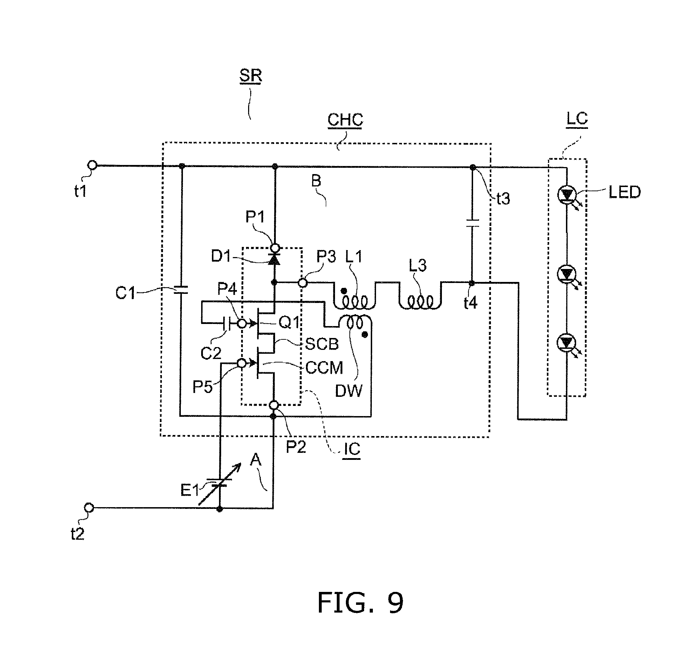

A description will be given of Example 6. Fig, 9 is a circuit diagram showing a switching power source device SR according to Example 6. In Fig. 9, the same reference numerals will be given to the same parts as those in Figs. 1 to 8, and a description thereof will be omitted.

Next, a description will be given of a configuration of the switching power source device SR according to Example 6 with reference to Fig. 9.

The switching power source device SR shown in Fig. 9 is a buck type, and a configuration of the series connected body SCB in the device IC for the switching power source is different from that in the switching power source device SR shown in Figs. 5 and 7. That is, states of series connection of the switching element Q1, the constant current element CCM, and the diode D1 are different. That is, the diode D1, the switching element Q1, and the constant current element CCM are connected in series in this order from an upper part to a lower pert in the drawing. In addition, the first external terminal P1 is derived from one main terminal (cathode) of the diode D1, the second external terminal P2 is derived from the other main terminal (source) of the constant current element CCM, and the third external terminal P3 is derived from a contact point between the other main terminal (anode) of the diode D1 and one main terminal (drain) of the switching element Q1.

Although the first inductor L1 and the third inductor L3 are connected in the same manner as in the switching power source device SR shown in Fig. 8, the load circuit LC is connected between the input terminal t1 and the first and third inductors L1 and L3. The drive winding DW is connected in the same manner as in the switching power source device SR shown Fig. 8. The potential source E1 capable of adjusting a potential difference is directly connected between the control terminal (gate) and the main terminal (source) of the constant current element CCM in the same manner as in the switching power source device SR shown in Fig. 8. In addition, the circuit operation of the switching power source device SR shown in Fig. 8 is the same as those in Examples 1 to 3. Furthermore, an effect of Example 6 is the same as those of Examples 1 to 5.

### Example 7

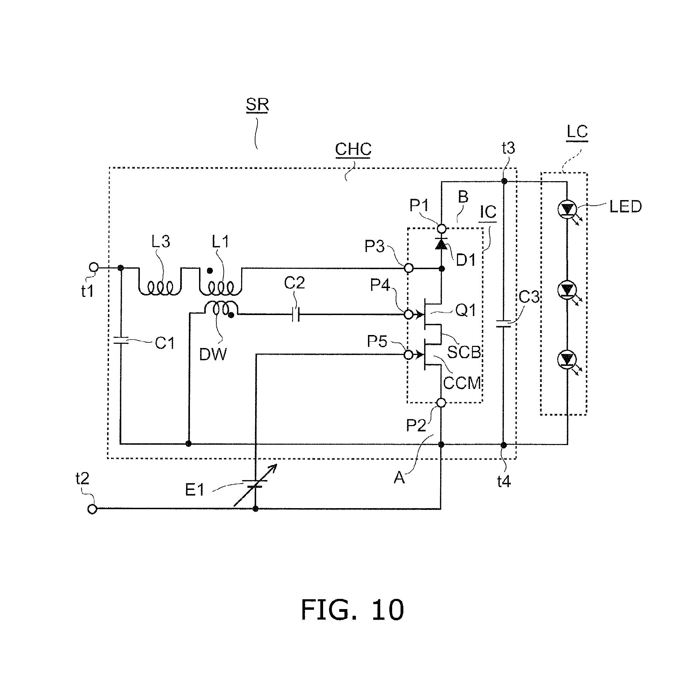

A description will be given of Example 7. Fig. 10 is a circuit diagram showing a switching power source device SR according to Example 7. In Fig. 10, the same reference numerals will be given to the same parts as those in Figs. 1 to 9, and a description thereof will be omitted.

Next, a description will be given of a configuration of the switching power source device SR according to Example 7 with reference to Fig. 10.

The switching power source device SR shown in Fig. 10 is a boost type. A series circuit of the input terminal t1, the third inductor L3, the first inductor L1, the switching element Q1, the constant current element CCM and the input terminal t2 configures the first circuit A. In addition, a parallel circuit of the input terminal t1, the third inductor L3, the first inductor L1, the output capacitor C3, and the load circuit LC and a series circuit of the diode D1 and the input terminal t2 configure the second circuit B.

The device IC for the switching power source includes a series connected body SCB in which the switching element Q1, the constant current element CCM, and the diode D1 are connected and integrated in series and the first to fifth external terminals P1 to P5. The state of the device IC for the switching power source is the same as those in the switching power source devices SR shown in Figs. 5 and 8.

The drive winding DW is connected between the control terminal (gate) and the other main terminal (source) of the switching element Q1 via the constant current element CCM and the coupling capacitor C2. The potential source E1 capable of adjusting a potential difference is directly connected between the control terminal (gate) and the other main terminal (source) of the constant current element CCM.

Next, a description will be given of a circuit operation of the switching power source device SR shown in Fig. 9.

If the direct power source DC is activated between the input terminals t1 and t2, and the switching element Q1 is turned on, the augmented current flows through the first circuit A. The On state of the switching element Q1 is maintained since the induction voltage of the drive winding DW applies a forward bias to the control terminal (gate) of the switching element Q1. Then, since voltage falling of the constant current element CCM rapidly increases when the augmented current reaches the constant current value of the constant current element CCM, the control terminal (gate) potential of the switching element Q1 becomes negative with respect to the other main terminal (source) potential, and the switching element Q1 is turned off.

If the switching element Q1 is turned off, the electromagnetic energy accumulated in the first inductor L1 and the third inductor L3 is released, and the reduced current flows through the second circuit B. If the reduced current flows, the load circuit LC is biased, and the load LED is operated. Since the drive winding DW applies an inverse bias while the reduced current flows, the switching element Q1 is maintained in the OFF state. Since no inverse bias is applied to the control terminal (gate) of the switching element Q1 if the reduced current reaches zero, the switching element Q1 is turned on again, and the above operation is repeated.

If α represents an ON duty of the switching element Q1, Vin represents an input voltage, and Vout represents an output voltage, the boost type satisfies Vout = Vin·1/α, and an output voltage which is higher than an input voltage is obtained in the above operation.

An effect of Example 7 is the same as those of Examples 1 to 6.

### Example 8

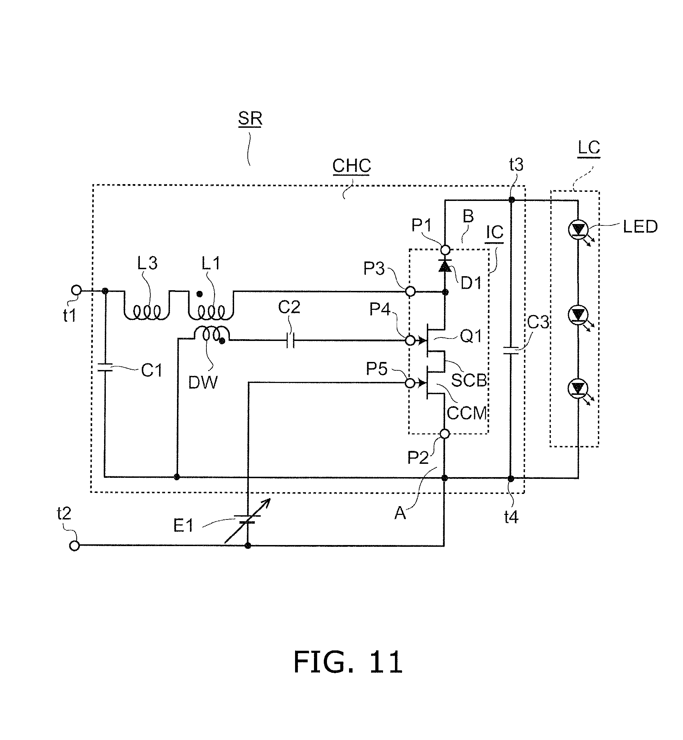

A description will be given of Example 8. Fig. 11 is a circuit diagram showing a switching power source device SR according to Example 8. In Fig. 11, the same reference numerals will be given to the same parts as those in Figs. 1 to 10, and a description thereof will be omitted.

Next, a description will be given of a configuration of the switching power source device SR according to Example 8 with reference to Fig. 11.

As shown in Fig. 11, the switching power source device SR is a boost type in the same manner as the switching power source device SR shown in Fig. 10, however, a series circuit of the input terminal t1, the third inductor L3, the first inductor L1, the switching element Q1, the constant current element CCM, and the input terminal t2 configures the first circuit A. In addition, a parallel circuit of the input terminal t1, the third inductor L3, the first inductor L1, the diode D1, the output capacitor C3, and the load circuit LC and a series circuit of the input terminal t2 configures the second circuit B. That is, connection points of the diode D1 to the series part of the switching element Q1 and the constant current element CCM are different.

The diode D1 is connected to the main terminal (drain) of the switching element Q1 in series. As for the series connected body SCB, the diode D1, the switching element Q1, and the constant current element CCM are connected and integrated in this order in series. In addition, the first external terminal P1 is derived from the main terminal (cathode) of the diode, and the second external terminal P2 is derived from the main terminal (source) of the constant current element CCM. The third external terminal P3 is derived from a connected point between the main terminal (anode) of the diode D1 and the main terminal (drain) of the switching element Q1. The fourth external terminal P4 is derived from the control terminal (gate) of the switching element Q1, and the fifth external terminal P5 is derived from the control terminal (gate) of the constant current element CCM. The device IC for the switching power source is configured by the series connected body SCB and the first to fifth external terminals P1 to P5. The state of the device IC for the switching power source is the same as that in the switching power source device SR shown in Fig. 9.

The drive winding DW is connected between the control terminal (gate) and the other main terminal (source) of the switching element Q1 via the constant current element CCM and the coupling capacitor C2. The potential source E1 capable of adjusting a potential difference is directly connected between the gate and the source of the constant current element CCM. In addition, a circuit operation of the switching power source device SR shown in Fig. 11 is the same as that in Example 7. Furthermore, an effect of Example 8 is the same as that of Example 7.

### Example 9

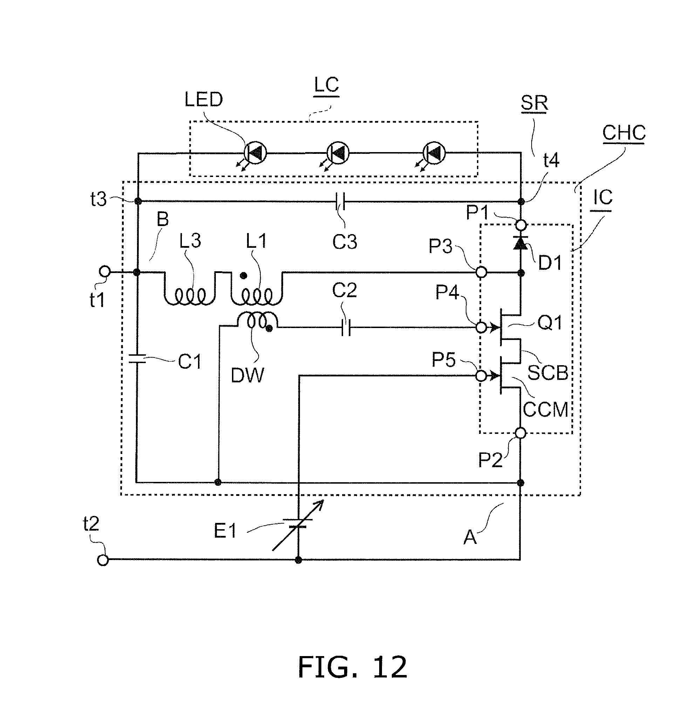

A description will be given of Example 9. Fig. 12 is a circuit diagram showing a switching power source device SR according to Example 9. In Fig. 12, the same reference numerals will be given of the same parts as those in Figs. 1 to 11, and a description thereof will be omitted.

Next, a description will be given of a configuration of the switching power source device SR according to Example 9 with reference to Fig. 12.

As shown in Fig. 12, the switching power source device SR is a buck-boost type, and a series circuit of the input terminal t1, the third inductor L3, the first inductor L1, the switching element Q1, the constant current element CCM, and the input terminal t2 configures the first circuit A. In addition, a closed circuit of a parallel circuit including the third inductor L3, the first inductor L1, the diode D1, and the output capacitor C3 and the load circuit LC configures the second circuit B.

As for the series connected body SCB, the diode D1, the switching element Q1, and the constant current element CCM are connected and integrated in this order in series. The device IC for the switching power source is configured by the series connected body SCB and the first to fifth external terminals P1 to P5. A state of the device IC for the switching power source is the same as those in the switching power source devices SR shown in Figs. 9 and 11.

The drive winding DW is connected between the control terminal (gate) and the other main terminal (source) of the switching element Q1 via the constant current element CCM. The potential source E1 capable of adjusting a potential difference is directly connected between the control terminal (gate) and the other main terminal (source) of the constant current element CCM.

Next, a description will be given of a circuit operation of the switching power source device SR shown in Fig. 11.

If the direct power source DC is activated between the input terminals t1 and t2, and the switching element Q1 is turned on, the augmented current flows through the first circuit A. The ON state of the switching element Q1 is maintained since the induction voltage of the drive winding DW applies a forward bias to the control terminal (gate) of the switching element Q1.

If the augmented current reaches the constant current value of the constant current element CCM, voltage falling of the constant current element CCM rapidly increases, and the control terminal (gate) potential of the switching element Q1 becomes negative relative to the other main terminal (source) potential. The switching element Q1 is turned off. If the switching element Q1 is turned off, the electromagnetic energy accumulated in the first inductor L1 and the third inductor L3 is released, and the reduced current flows through the second circuit B. If the reduced current flows, the load circuit LC is biased, and the load LED is operated. Since the drive winding DW applies a reverse bias while the reduced current flows, the switching element Q1 is maintained in the OFF state.

Since no reverse bias is applied to the control terminal (gate) of the switching element Q1 if the reduced current reaches zero, the switching element Q1 is turned on again, and the above operation is repeated.

If α represents an ON duty of the switching element Q1, Vin represents an input voltage, and Vout represents an output voltage, the boost type satisfies Vout = Vin·α/(1 - α), and both higher and lower output voltage than an input voltage can be obtained in accordance with a value of α in the above operation.

An effect of Example 9 is the same as those of Examples 1 to 8.

### Example 10

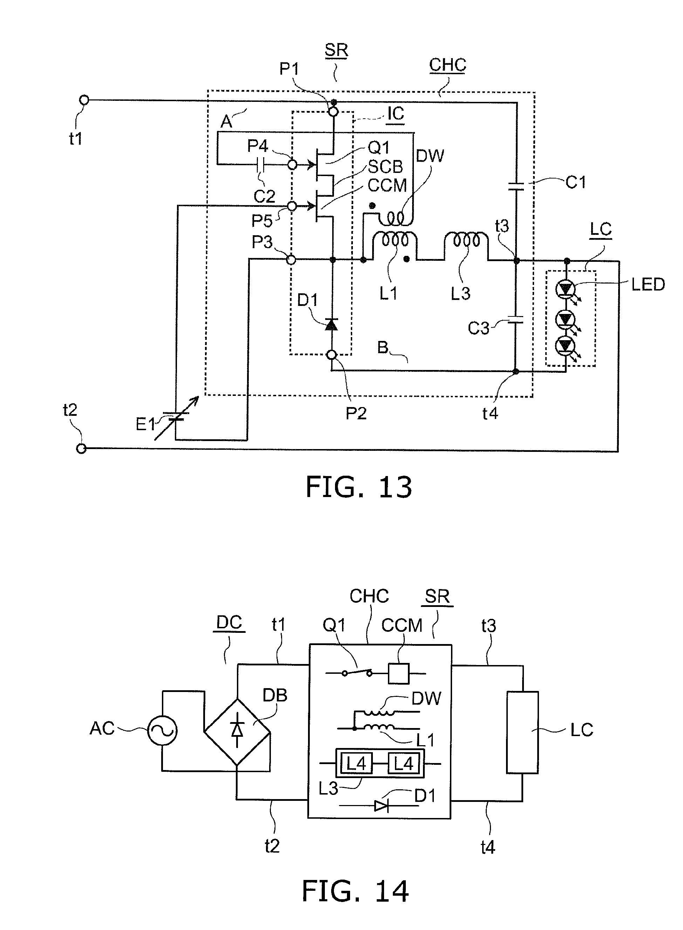

A description will be given of Example 10. Fig. 13 is a circuit diagram showing a switching power source device SR according to Example 10. In Fig. 13, the same reference numerals will be given to the same parts as those in Figs. 1 to 12, and a description thereof will be omitted.

Next, a description will be given of a configuration of the switching power source device SR according to Example 10 with reference to Fig. 13.

As shown in Fig. 13, the switching power source device SR is a buck-boost type in the same manner as the switching power source device SR shown in Fig. 12. A parallel circuit of the input terminal t1, the switching element Q1, the constant current element CCM, the first inductor L1, the third inductor L3, the output capacitor C3, and the load circuit LC and a series circuit of the input terminal t2 configure the first circuit A. In addition, a parallel circuit of the first inductor L1, the third inductor L3, the output capacitor C3, and the load circuit LC and a closed circuit of the diode D1 configure the second circuit B.

As for the series connected body SCB, the switching element Q1, the constant current element CCM, and the diode D1 is connected and integrated in this order in series. The device IC for the switching power source is configured by the series connected body SCB and the first to fifth external terminals P1 to P5. A state of the device IC for the switching power source is the same as those in the switching power source devices SR shown in Figs. 5, 8, and 10.

The drive winding DW is connected between the control terminal (gate) and the other main terminal (source) of the switching element Q1 via the constant current element CCM and the coupling capacitor C2. The potential source E1 capable of adjusting a potential difference is directly connected between the control terminal (gate) and the terminal (source) of the constant current element CCM. In addition, a circuit operation of the switching power source device SR shown in Fig. 13 is the same as that in Example 9. Furthermore, an effect of Example 10 is the same as that of Example 9.

### Example 11

A description will be given of Example 11. This example is a modified example of Example 1. Fig. 14 is a circuit diagram showing a switching power source device SR according to Example 11. In Fig. 14, the same reference numerals will be given to the same parts as those in Figs. 1 to 13, and a description thereof will be omitted.

A description will be given of a configuration of the switching power source device SR according to Example 11 with reference to Fig. 14. The switching power source device SR according to this example is different from the switching power source device SR shown in Fig. 1 in the configurations of the third inductor L3. The third inductor L3 is configured by a plurality of fourth inductors L4 with equal inductance. Although two fourth inductors L4 with equal inductance are used in Fig. 14, the number of the fourth inductors is not limited thereto and may be two or more. The fourth inductors L4 are connected to each other in series.

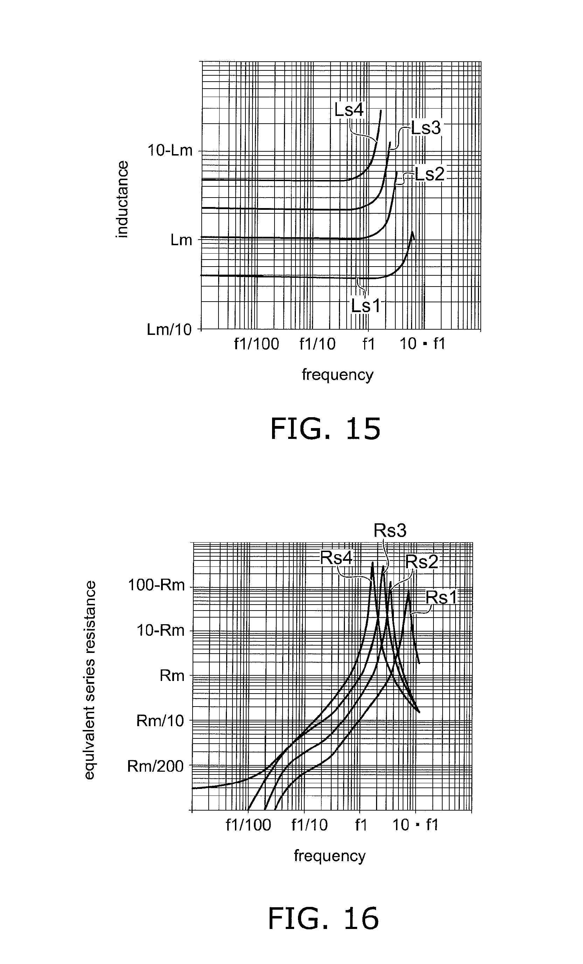

Figs. 15 and 16 show measurement results of impedance frequency properties of the fourth inductors L4 with inductance values differentiated by providing winding to a magnetic core with a same size and a same shape and changing a number of times of the winding. In Figs. 15 and 16, the impedance of the fourth inductors L4 is measured, the impedance of the fourth inductors L4 is regarded as an equivalent circuit configured by inductors Ls and resistances Rs connected in series, and values obtained by non-dimensionalizing frequencies with a frequency f1 are plotted while the frequency properties of the inductors Ls and the resistances Rs are represented by the horizontal axis. In Fig. 15, the vertical axis represents values obtained by non-dimensionalizing the inductance of the inductors Ls with the inductance Lm. In Fig. 16, the vertical axis represents values obtained by non-dimensionalizing impedance of the resistances Rs with the impedance Rm.

In Fig. 15, the inductance of the inductors Ls in a region (low-frequency region) where no change occurs with respect to the frequency substantially satisfies, Ls3 = (1/2)Ls4, Ls2 = (1/5)Ls4, and Ls1 = (1/10)Ls4. It can be understood in Figs. 15 and 16 that the inductance of the inductors Ls and the impedance of the resistances Rs increase and a resonant characteristic is further displayed as the frequency increases. The value of the resistances Rs is a parameter which represents a loss in the high-frequency operation, a loss can be preferably reduced as the value of the resistance Rs is smaller.

In Fig. 16, the impedance of the resistances Rs satisfies Rs4 = 4.3 Rm if one inductor Ls with the inductance of Ls4 is used, in consideration of the operation at the frequency f1. Since Rs3 = 1.1 Rm is satisfied if two inductors Ls with the inductance of Ls3 are used, Rs in this case is 2.2 Rm, which is double of 1.1 Rm, and the loss is reduced to about a half of the loss when one inductor Ls with the inductance of Ls4 is used. Since Rs2 = 0.4 Rm is satisfied if five inductors Ls with the inductance of Ls2 are used, Rs in this case is 2.0 Rm, which is five times as large as 0.4 Rm, and the loss is reduced to about a half of the loss compared to the case where one inductor Ls with the inductance of Ls4 is used.

Accordingly, it is possible to reduce the loss due to the magnetic material for the inductors and the loss by the winding in the high-frequency operation by using a plurality of inductors with equal inductance. In addition, it is possible to reduce cost by using a plurality of inductors with equal inductance. Furthermore, it is possible to configure the drive circuit of the switching element Q1 without complicating the structure.

### Example 12

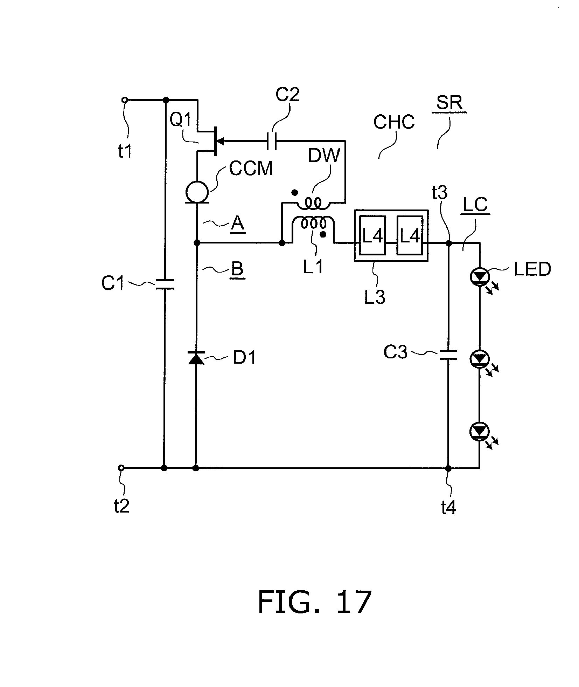

A description will be given of Example 12. This example is a modified example of Example 2. Fig. 17 is a circuit diagram showing a switching power source device SR according to Example 12. In Fig. 17, the same reference numerals will be given to the same parts as those in Figs. 1 to 16, and a description thereof will be omitted.

A description will be given of a configuration of the switching power source device SR according to Example 12 with reference to Fig. 17. The switching power source device SR of this example is different from the switching power source device SR shown in Fig. 2 in the configurations of the third inductor L3. The third inductor L3 is configured by a plurality of fourth inductors L4 with equal inductance. Although two fourth inductors L4 with equal inductance are used in Fig. 17, the number of the fourth inductors is not limited thereto and may be two or more. The fourth inductors L4 are connected to each other in series.

A circuit operation of the switching power source device SR according to Example 12 shown in Fig. 17 is the same as that in Example 2. Furthermore, an effect of Example 12 is the same as those of Examples 2 and 11.

### Example 13

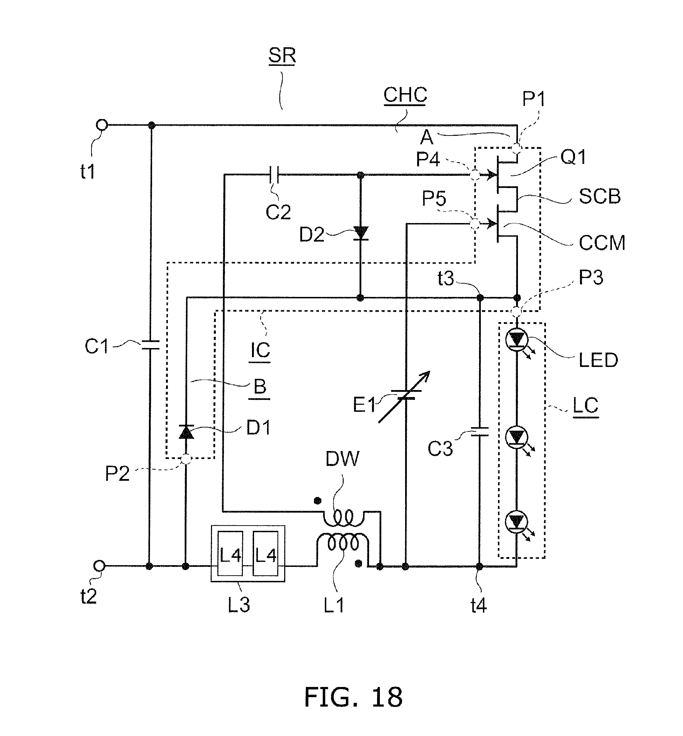

A description will be given of Example 13. This example is a modified example of Example 3. Fig. 18 is a circuit diagram showing a switching power source device SR according to Example 13. In Fig. 18, the same reference numerals will be given to the same parts as those in Figs. 1 to 17, and a description thereof will be omitted.

A description will be given of a configuration of the switching power source device SR according to Example 13 with reference to Fig. 18. The switching power source device SR of this example is different from the switching power source device SR shown in Fig. 5 in the configurations of the third inductor L3. The third inductor L3 is configured by a plurality of fourth inductors L4 with equal inductance. Although two fourth inductors L4 with equal inductance are used in Fig. 18, the number of the fourth inductors is not limited thereto and may be two or more. The fourth inductors L4 are connected to each other in series.

A circuit operation of the switching power source device SR according to Example 13 shown in Fig. 18 is the same as that in Example 3. Furthermore, an effect of Example 13 is the same as those of Examples 3 and 11.

### Example 14

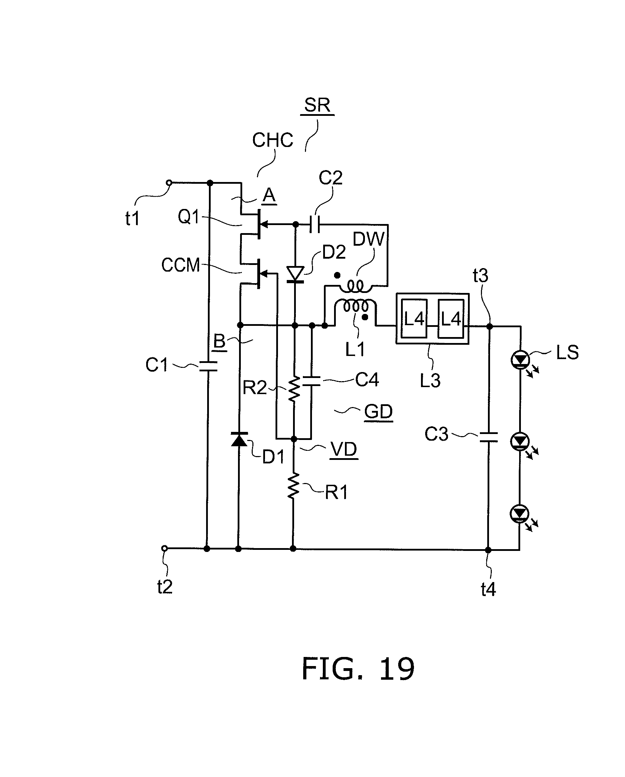

A description will be given of Example 14. This example is a modified example of Example 4. Fig. 19 is a circuit diagram showing a switching power source device SR according to Example 14. In Fig. 19, the same reference numerals will be given to the same parts as those in Figs. 1 to 18, and a description thereof will be omitted.

A description will be given of a configuration of the switching power source device SR according to Example 14 with reference to Fig. 19. The switching power source device SR of this example is different from the switching power source device SR shown in Fig. 6 in the configurations of the third inductor L3. The third inductor L3 is configured by a plurality of fourth inductors L4 with equal inductance. Although two fourth inductors L4 with equal inductance are used in Fig. 19, the number of the fourth inductors is not limited thereto and may be two or more. The fourth inductors L4 are connected to each other in series.

A circuit operation of the switching power source device SR according to Example 14 shown in Fig. 19 is the same as that in Example 4. Furthermore, an effect of Example 14 is the same as those of Examples 4 and 11.

### Example 15

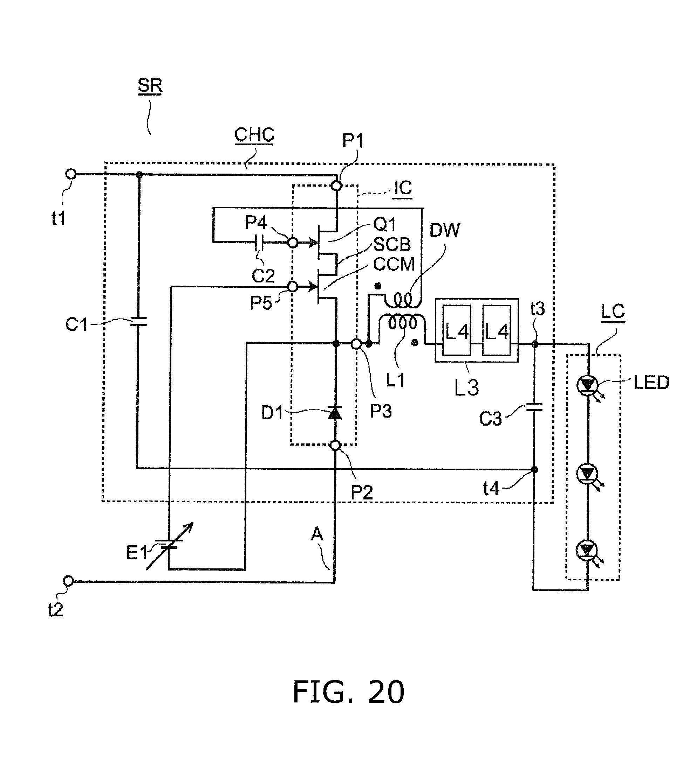

A description will be given of Example 15. This example is a modified example of Example 5. Fig. 20 is a circuit diagram showing a switching power source device SR according to Example 15. In Fig. 20, the same reference numerals will be given to the same parts as those in Figs. 1 to 19, and a description thereof will be omitted.

A description will be given of a configuration of the switching power source device SR according to Example 15 with reference to Fig. 20. The switching power source device SR of this example is different from the switching power source device SR shown in Fig. 8 in the configurations of the third inductor L3. The third inductor L3 is configured by a plurality of fourth inductors L4 with equal inductance. Although two fourth inductors L4 with equal inductance are used in Fig. 20, the number of the fourth inductors is not limited thereto and may be two or more. The fourth inductors L4 are connected to each other in series.

A circuit operation of the switching power source device SR according to Example 15 shown in Fig. 20 is the same as that in Example 5. Furthermore, an effect of Example 15 is the same as those of Examples 5 and 11.

### Example 16

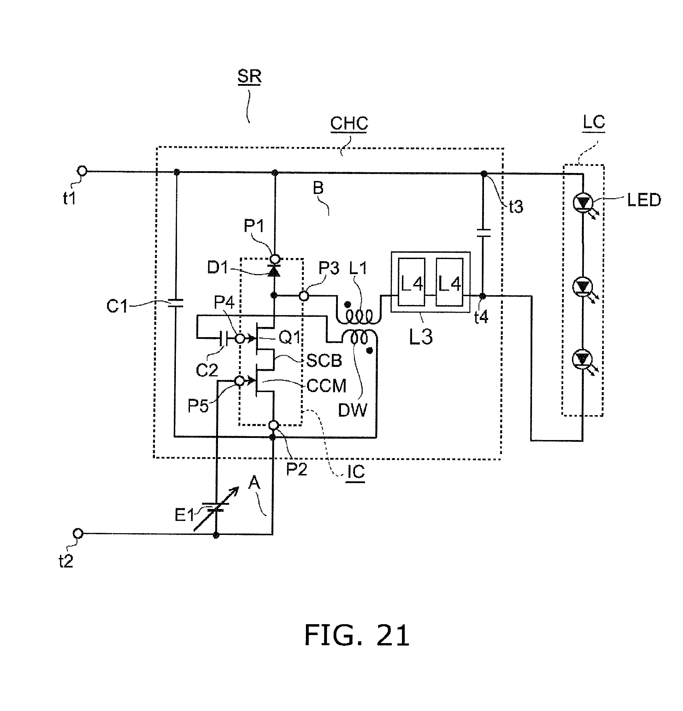

A description will be given of Example 16. This example is a modified example of Example 6. Fig. 21 is a circuit diagram showing a switching power source device SR according to Example 16. In Fig. 21, the same reference numerals will be given to the same parts as those in Figs. 1 to 20, and a description thereof will be omitted.

A description will be given of a configuration of the switching power source device SR according to Example 16 with reference to Fig. 21. The switching power source device SR of this example is different from the switching power source device SR shown in Fig. 9 in the configurations of the third inductor L3. The third inductor L3 is configured by a plurality of fourth inductors L4 with equal inductance. Although two fourth inductors L4 with equal inductance are used in Fig. 21, the number of the fourth inductors is not limited thereto and may be two or more. The fourth inductors L4 are connected to each other in series.

A circuit operation of the switching power source device SR according to Example 16 shown in Fig. 21 is the same as that in Example 6. Furthermore, an effect of Example 16 is the same as those of Examples 6 and 11.

### Example 17

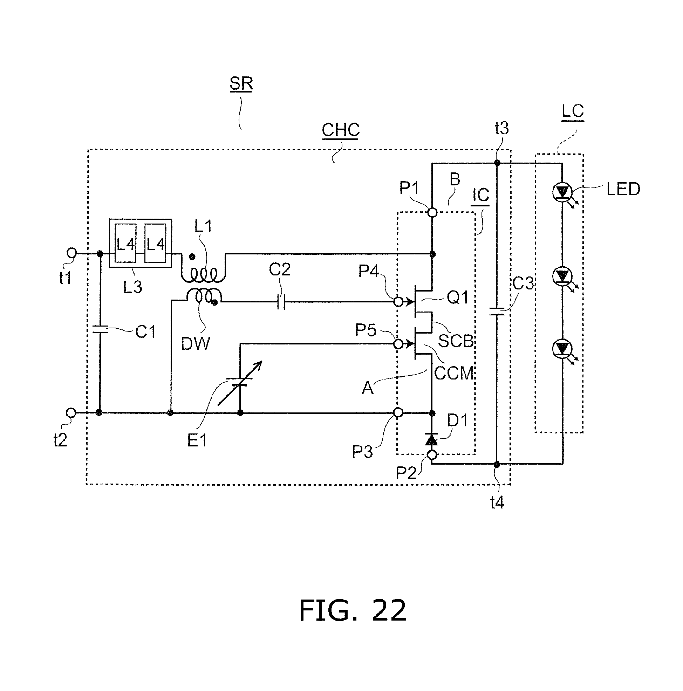

A description will be given of Example 17. This example is a modified example of Example 7. Fig. 22 is a circuit diagram showing a switching power source device SR according to Example 17. In Fig. 22, the same reference numerals will be given to the same parts as those in Figs. 1 to 21, and a description thereof will be omitted.

A description will be given of a configuration of the switching power source device SR according to Example 17 with reference to Fig. 22. The switching power source device SR of this example is different from the switching power source device SR shown in Fig. 10 in the configurations of the third inductor L3. The third inductor L3 is configured by a plurality of fourth inductors L4 with equal inductance. Although two fourth inductors L4 with equal inductance are used in Fig. 22, the number of the fourth inductors is not limited thereto and may be two or more. The fourth inductors L4 are connected to each other in series.

A circuit operation of the switching power source device SR according to Example 17 shown in Fig. 22 is the same as that in Example 7. Furthermore, an effect of Example 17 is the same as those of Examples 7 and 11.

### Example 18

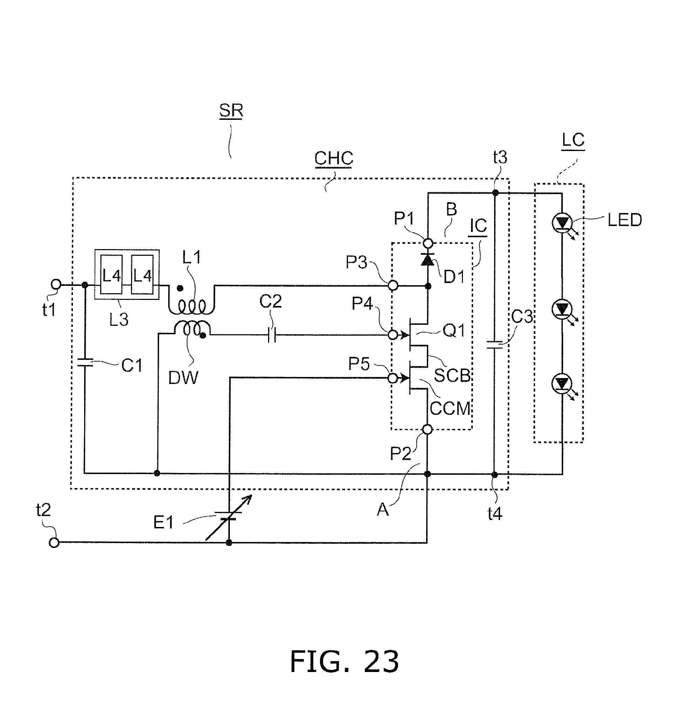

A description will be given of Example 18. This example is a modified example of Example 8. Fig. 23 is a circuit diagram showing a switching power source device SR according to Example 18. In Fig. 23, the same reference numerals will be given to the same parts as those in Figs. 1 to 22, and a description thereof will be omitted.

A description will be given of a configuration of the switching power source device SR according to Example 18 with reference to Fig. 23. The switching power source device SR of this example is different from the switching power source device SR shown in Fig. 11 in the configurations of the third inductor L3. The third inductor L3 is configured by a plurality of fourth inductors L4 with equal inductance. Although two fourth inductors L4 with equal inductance are used in Fig. 23, the number of the fourth inductors is not limited thereto and may be two or more. The fourth inductors L4 are connected to each other in series.

A circuit operation of the switching power source device SR according to Example 18 shown in Fig. 23 is the same as that in Example 8. Furthermore, an effect of Example 18 is the same as those of Examples 8 and 11.

### Example 19

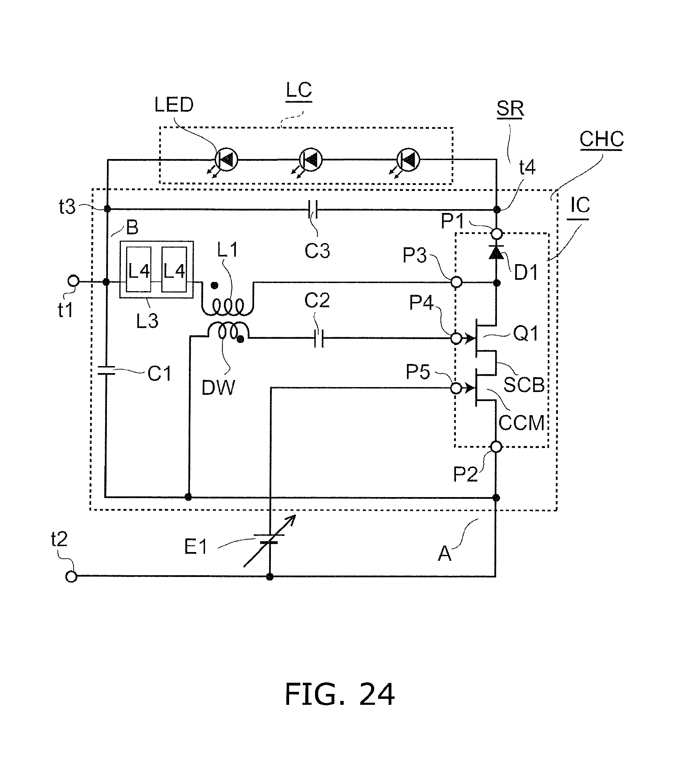

A description will be given of Example 19. This example is a modified example of Example 9. Fig. 24 is a circuit diagram showing a switching power source device SR according to Example 19. In Fig. 24, the same reference numerals will be given to the same parts as those in Figs. 1 to 23, and a description thereof will be omitted.

A description will be given of a configuration of the switching power source device SR according to Example 19 with reference to Fig. 24. The switching power source device SR of this example is different from the switching power source device SR shown in Fig. 12 in the configurations of the third inductor L3. The third inductor L3 is configured by a plurality of fourth inductors L4 with equal inductance. Although two fourth inductors L4 with equal inductance are used in Fig. 24, the number of the fourth inductors is not limited thereto and may be two or more. The fourth inductors L4 are connected to each other in series.

A circuit operation of the switching power source device SR according to Example 19 shown in Fig. 24 is the same as that in Example 9. Furthermore, an effect of Example 19 is the same as those of Examples 9 and 11.

### Example 20

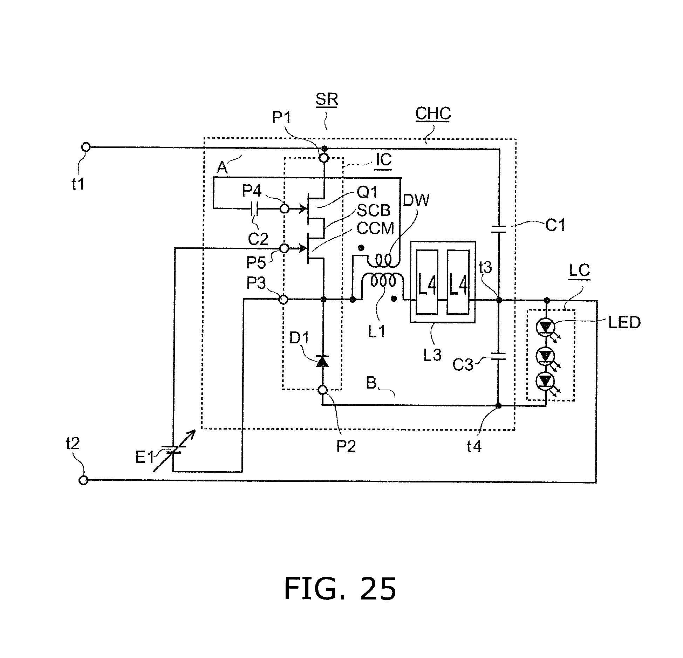

A description will be given of Example 20. This example is a modified example of Example 10. Fig. 25 is a circuit diagram showing a switching power source device SR according to Example 20. In Fig. 25, the same reference numerals will be given to the same parts as those in Figs. 1 to 24, and a description thereof will be omitted.

A description will be given of a configuration of the switching power source device SR according to Example 20 with reference to Fig. 25. The switching power source device SR of this example is different from the switching power source device SR shown in Fig. 13 in the configurations of the third inductor L3. The third inductor L3 is configured by a plurality of fourth inductors L4 with equal inductance. Although two fourth inductors L4 with equal inductance are used in Fig. 25, the number of the fourth inductors is not limited thereto and may be two or more. The fourth inductors L4 are connected to each other in series.

A circuit operation of the switching power source device SR according to Example 20 shown in Fig. 25 is the same as that in Example 10. Furthermore, an effect of Example 20 is the same as those of Examples 10 and 11.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A switching power source device (SR) comprising:
a direct power source (DC); and
a chopper circuit (CHC) which includes a pair of input terminals (t1, t2) connected to the direct power source (DC) and a pair of output terminals (t3, t4) connected to a load,
wherein the chopper circuit (CHC) includes
a first inductor (L1),
a second inductor (DW) which is magnetically coupled to the first inductor (L1),
a third inductor (L3) which is connected to the first inductor (L1),
a switching element (Q1) which causes an augmented current to flow from the direct power source (DC) to the first and third inductors (L1, L3) while turned on,
a constant current element (CCM) which is connected to the switching element (Q1) in series,
a rectifier element (D1) which causes a reduced current to flow through the first and third inductors (L1, L3) while the switching element (Q1) is turned off, and
a drive circuit which controls a gate voltage of the switching element (Q1) and turns off the switching element after the switching element (Q1) is turned on and the augmented current reaches a constant current element (CCM) saturated state.

2. The device (SR) according to claim 1,
wherein the third inductor (L3) is configured by a plurality of fourth inductors (L4) with equal inductance.

3. The device (SR) according to claim 1,
wherein the first and second inductors (L1, DW) are formed as electrically-conducting paths on a circuit substrate of the chopper circuit (CHC).

4. The device (SR) according to claim 3,
wherein a magnetic body which accommodates the first and second inductors (L1, DW) therein is formed.

5. An illuminating apparatus comprising:
a load circuit (LC) in which an output capacitor (C3) and an illuminating load (LED) are connected in parallel; and
a switching power source device (SR),
wherein the switching power source device (SR) includes
a direct power source (DC); and
a chopper circuit (CHC) which includes a pair of input terminals (t1, t2) connected to the direct power source (DC) and a pair of output terminals (t3, t4) connected to a load,
wherein the chopper circuit (CHC) includes
a first inductor (L1),
a second inductor (DW) which is magnetically coupled to the first inductor (L1),
a third inductor (L3) which is connected to the first inductor (L1),
a switching element (Q1) which causes an augmented current to flow from the direct power source (DC) to the first and third inductors (L1, L3) while turned on,
a constant current element (CCM) which is connected to the switching element (Q1) in series,
a rectifier element (D1) which causes a reduced current to flow through the first and third inductors (L1, L3) while the switching element (Q1) is turned off, and
a drive circuit which controls a gate voltage of the switching element (Q1) and turns off the switching element after the switching element (Q1) is turned on and the augmented current reaches a constant current element (CCM) saturated state.
